# EUROPEAN PATENT APPLICATION

(11) **EP 1 429 246 A1**
(43) Date of publication of application: **16.06.2004**
(21) Application number: 02258597.0
(22) Date of filing: 13.12.2002
(51) Int. Cl.: G06F 9/46, G06F 12/14

(54) **Apparatus and method for switching mode in a computer system**

(71) Applicant: Sun Microsystems, Inc., Santa Clara, California 95054 (US)
(72) Inventor: Durrant, Paul, Slough SL2 3DX (GB)
(74) Representative: Davies, Simon Robert

(57) **Abstract**

A computer system runs one or more application programs and an operating system incorporating a kernel. Routines belonging to the kernel are executed in privileged mode, while routines belonging to an application program are executed in non-privileged mode. A set of system calls are provided to allow an application program to call into the kernel routines. This is typically so that the application program can make use of various low-level system facilities, such as for file input/output, process creation, and so on. The kernel routines are stored within a particular region of memory. Whenever a piece of code is executed that is located in this region, the system automatically switches into privileged mode. This provides a quick mechanism for transferring from an application program into the kernel.

## Description

### Field of the Invention

The present invention relates to controlling a computer system running one or more application programs and an operating system incorporating a kernel, in which application programs run in one mode and the kernel in another mode.

### Background of the Invention

A typical modem computing system has one or more application programs running on top of an operating system, which is responsible for managing the general hardware functions and overall processing of the system. Many operating systems are based on a central kernel, usually written in low-level (binary) code, and a range of libraries and other functions provided on top of this. The kernel directly manages interactions with hardware of the computer, and also makes various system services available to the application programs.

There are typically various ways in which processing can transfer from an application program into the kernel. One possibility is that there is a hardware interrupt, caused for example by the user clicking on a mouse or inputting data with a keyboard. Another possibility is that a processor trap occurs, for example, when an application attempts to perform a divide by zero. A further mechanism to transfer processing from an application program into the kernel is for the application program to make a system call. This is used to access various system services controlled by the kernel, such as file input/output, networking, process and thread creation and termination, and interprocess communications (IPC). The set of system calls therefore represents an application programming interface (API), frequently in the form of system libraries, through which an application program can enter into the operating system, and more particularly into the kernel, in order to access a range of low-level functions.

An application program normally executes in user mode. This is a non-privileged mode, in which the operating system enforces various restrictions on a process, for example, the process is only allowed to access its own memory. This safeguard is to prevent a poorly written application from corrupting or damaging any other applications on the computer (or even the operating system itself), and so helps to ensure good system behaviour.

On the other hand, the kernel runs in kernel mode (also known as privileged mode), in which some of the limitations of user mode are removed. For example, a privileged process can access all the kernel data structures and also the underlying hardware. It will be appreciated that this flexibility is necessary for the kernel routines to perform their allocated tasks. In some systems, an indicator bit is associated with each unit of memory, to control whether access to the memory is allowed to just privileged (kernel) code, or to application code as well.

The mechanism for transferring from user mode to kernel mode as a result of a system call in the Solaris operating system (a UNIX-based environment) on SPARC processors, available from Sun Microsystems Inc., is described in the book: "Solaris Internals: Core Kernel Architecture" by Jim Mauro and Richard McDougall, Sun Microsystems Press/Prentice Hall, 2001, ISBN 0-13-022496-0 (see in particular pages 44-46).

In such a system, when an application program makes a system call (for example, to open a file), the arguments for the call are generally loaded into specific memory locations or registers, while an identifier for the call is stored in a global register. A software-initiated trap instruction is then called, which invokes the appropriate trap handler. The trap handler for system calls saves various processor state information (program counters, trap type, etc.) for the CPU on which the system call will execute, as well as the return address. Processing now enters privileged mode, and starts execution of the relevant trap code.

In order to locate the particular requested system call, a table is provided which contains one structure for each system call. The table is accessed by a system call number, which can be derived from the named system call of the relevant API, as stored in the global register, using an editable system file (this file gives flexibility as regards the available system calls, since many are implemented as dynamically loadable modules). The table entry for a system call details the form of the arguments for the call, and contains a pointer to the actual routine itself. This then allows the trap handler to launch the desired trap routine, and to pass it the specified arguments (as saved in the register(s)).

Unfortunately, the overhead associated with the above processing is quite considerable due to the call-set-up process. This is especially detrimental where the system call itself is very short, and returns after only a few instructions. One known way of addressing this problem in the Solaris environment, as described in the above-referenced book by Mauro and McDougall, is to allow a user process to jump into protected kernel mode, do some processing, and then return, without the overhead of the full system call framework. This approach is only available for those calls that pass their simple arguments back and forth via registers, rather than on the stack, since in this case the call does not need to save all the state information prior to execution. Only a few such fast system calls are implemented, and these are primarily involved with accessing the system clock. Accordingly, it will be appreciated that a large majority of system calls still involve the more complicated and rather time-consuming set-up process.

### Summary of the Invention

Thus one embodiment of the invention provides a method of controlling a computer system running one or more application programs and an operating system incorporating a kernel. The method includes providing a privileged mode for executing routines belonging to the kernel, and providing a non-privileged mode for executing routines belonging to an application program. The kernel is located within a first region of memory, and the application program is located in a second region of memory. The method further includes setting the system to privileged mode in response to accessing code in the first region of memory, and to non-privileged mode in response to accessing code in the second region of memory.

The switching between privileged and non-privileged mode can therefore be driven by the location of the code being executed, thereby removing the need to have to call a trap routine to change mode. This in turn can lead to performance gains, by allowing an application program to access kernel routines without having to make a trap call.

In one particular embodiment, the application program in the second memory region accesses the kernel in the first memory region by making a system call, which is implemented as a standard function call. Thus the system monitors all function calls, and identifies those representing system calls (i.e. into the kernel) on the basis of the memory regions in which the calling and called routines are located. In other words, a call from the second memory region into the first memory region represents a system call, and so triggers a switch into privileged mode. Such a system call therefore only has the overhead of a standard function call (rather than having to make a trap call to change into privileged mode when invoking a kernel function).

In this particular approach, the system monitors the locations of the called and calling routines, in order to identify when a function call needs a mode switch. Note that this check can be made very lightweight. For example, it may be implemented by simply comparing a calling address and a called address for the function call against predetermined address limits corresponding to the first and second memory regions. The memory region(s) in which the calling address and called address are located can then be determined on the basis of these comparisons.

In one embodiment, the computer system memory is divided into pages. An indicator can then be associated with each page, representative of whether the page is located in said first region of memory or said second region of memory. This indicator is typically stored in a page translation table, which is already normally provided to control paging operations for the system. This use of existing data structures helps to increase compatibility with existing systems.

In a particular implementation, the indicator has a first value for the second memory region, and a second or third value for the first memory region. Code on a page having the first value executes in non-privileged mode and can be accessed from code on a page having the first, second or third value. This typically corresponds to application code. Code on a page having the second value executes in privileged mode and can be accessed from code on a page having the first, second or third value. Finally code on a page having the third value executes in privileged mode and can be accessed from code on a page having the second or third value.

Thus code on pages having the second or third value typically corresponds to kernel code. More particularly, kernel code on pages having the second value can be directly accessed by the application program (on pages having the first value), but kernel code on pages having the third value cannot be directly accessed by the application program. Pages having the third value can therefore be used to store more vulnerable or sensitive portions of the kernel.

In one particular embodiment, a page having the second value is used to invoke a corresponding routine in code on a page having the third value. In other words, pages having the second value may not contain any functional code per se, but rather may simply serve as a tightly controlled set of entry points into the kernel code itself, which then resides on pages having the third value. Consequently, an application program can only access the kernel code via this set of entry points. Such an approach may offer improved security over the situation where all the kernel code for a function is located on a page having a second value (since the code may then be potentially entered at an unexpected location).

Note that the presence of three memory regions (corresponding to first, second and third values) is not limited to a page-based system, where access is controlled via indicators at the page level. Thus more generally, in some embodiments the first memory region may be divided into first and second sub-regions. If a function call from the second memory region is then permitted into only one (but not both) of the first and second sub-regions, this again can be used to provide controlled access to the kernel code, analogous to that described above.

In one embodiment, the first and second memory regions are determined as part of system initialisation, with the kernel and application programs then being loaded accordingly. Note that such loading does not itself have to be completed at initialisation. For example, some kernel routines may be dynamically loaded, as previously indicated, while in general an application program will not be loaded until it is specifically invoked.

The boundaries of the first and memory regions are generally adjustable by a system administrator (although typically any such modification would not take effect until system re-initialisation). It will be appreciated however that for security reasons, an application program should not normally be permitted to alter the boundaries of the first and second memory regions. This is to ensure that an application program is not able to get itself executed in privileged mode.

The ability to control mode setting as described herein (between privileged and non-privileged modes) also offers further potential benefits, over and above the provision of faster system calls. In particular, there is more flexibility in the allocation of mode to particular code, because this is driven off the code location, rather than being tied to the system call interface. For example, certain application server code (such as a database server), which is regarded as highly trusted and reliable, could potentially be loaded into the first region of memory (corresponding to the kernel). Being able to execute this code in privileged mode may then lead to performance benefits, since, for example, the application server is able to directly interact with network hardware. This may provide a significant advantage, given that such application server code is frequently used to perform repetitive transactions that demand a high throughput (such as in a server for web-based selling).

Conversely, it may also be desirable to locate certain routines in the second region of memory, so that they do not run in privileged mode, despite the fact that such routines are normally regarded as forming part of the kernel. An example of this might be device drivers. Although formally included in the kernel, device drivers often developed by third party vendors in conjunction with particular hardware, and are not always completely reliable. Unfortunately, because device drivers are normally regarded as part of the kernel, and so run in privileged mode, any fault in a device driver is quite likely to bring the whole system down. The ability to locate such device drivers in the second region of memory is therefore potentially attractive, since they will then execute in non-privileged mode. Consequently, if there are any problems in a device driver, the disruption that this causes should be limited (given that the driver is running in user mode), and it should not bring the whole system down.

In accordance with another embodiment of the invention, a computer program is provided for implementing the above methods. The program may be pre-installed into a system, or loaded off some portable storage medium, such as a magnetic tape, CD ROM, DVD, etc.. Alternatively, some or all of the program may be downloaded via a transmission medium over a network.

In accordance with another embodiment of the invention, a computer program product is provided comprising program instructions embodied on a media. The program instructions are loaded into a computer system running one or more application programs and an operating system incorporating a kernel. The instructions (which may be included in the operating system itself) cause the kernel to be located in a first region of memory, and an application program to be located in a second region of memory. The instructions provide a privileged mode in the computer system for executing routines belonging to the kernel, and a non-privileged mode for executing routines belonging to an application program. The instructions further cause the system to be set into privileged mode in response to accessing code in the first region of memory, and to be set to non-privileged mode in response to accessing code in the second region of memory.

In accordance with another embodiment of the invention, there is provided a computer system comprising one or more application programs having routines that execute in a non-privileged mode; an operating system incorporating a kernel having routines that execute in a privileged mode; and a memory. The kernel is located within a first region of the memory, and the application program is located within a second region of memory. The system is responsive to an access to code in the first region of memory to set the system into privileged mode, and is responsive to an access to code in the second region of memory to set the system into non-privileged mode.

In one particular embodiment, the access to code in the first region of memory and the access to code in the second region of memory each represents a jump of processing location. Thus the system does not need to monitor all code accesses, but only those that have a jump in location (typically a function call or a return from a function call). This can be achieved with relatively minimal overhead. Such an approach is especially suitable for when the first and second memory regions are clearly separated from one another (as will normally be the case in most systems). Thus in these circumstances, it is only a processing jump that can transfer from one memory region to another, and hence require a change in the mode setting from privileged to non-privileged, or vice versa (as appropriate).

It will be appreciated that the system and computer program product embodiments of the invention will generally benefit from the same particular features as the method embodiment of the invention.

### Brief Description of the Drawings

Various embodiments of the invention will now be described in detail by way of example only with reference to the following drawings in which like reference numerals pertain to like elements and in which:
Figure 1 is a schematic diagram of a typical computer system;
Figure 2 is a schematic diagram of the main software components running on the computer system of Figure 1;
Figure 3 is a schematic diagram of a virtual memory system as implemented in the computer system of Figure 1;
Figure 4 is a schematic diagram of the page translation table used in the virtual memory system of Figure 3, in accordance with one embodiment of the present invention;
Figure 5 is a schematic diagram of the address space in one embodiment of the invention, where a system call table is used as an intermediary between the kernel and application programs; and
Figure 6 is a schematic diagram of the address space of another embodiment of the invention.

### Detailed Description

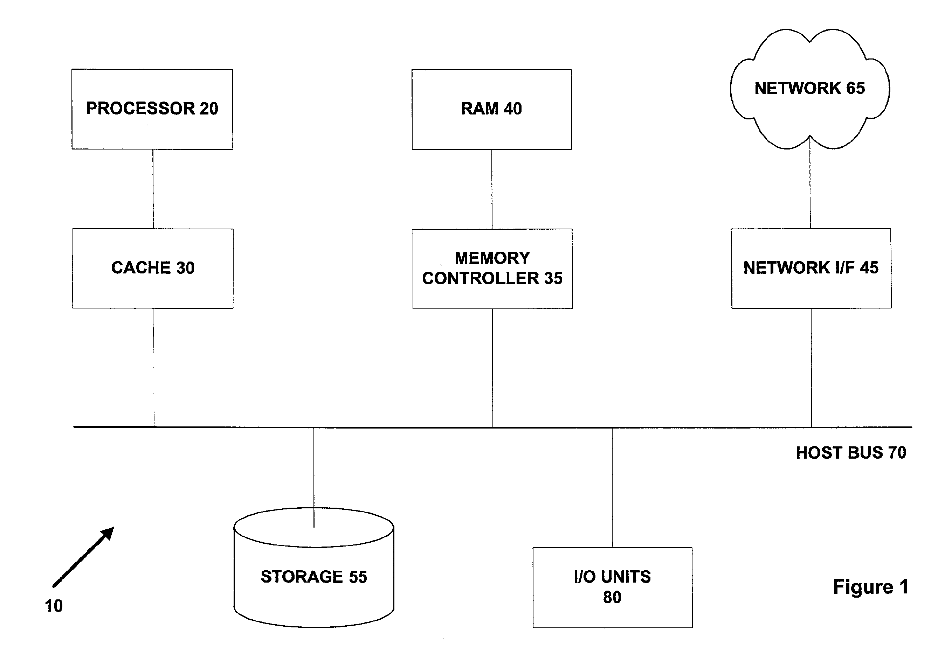

Figure 1 is a schematic diagram depicting the main hardware components of a typical computer system 10. (It will be appreciated that this is purely by way of example, and the skilled person will be aware of a very wide range of configurations other than that shown in Figure 1). The various components of the computer system 10 are interconnected by a bus 70, which may in practice be implemented by a hierarchy of different speed buses, to provide communications between the components. Note that a switching fabric can sometimes be provided instead of the bus (this is particularly the case in higher-end systems, such as a large-scale server).

At the heart of computer system 10 is a processor 20, also known as a central processing unit (CPU), which is responsible for executing program instructions and directing the overall operations of system 10. Many modem systems support multiprocessing, either by having more than one processor unit, or (and) by forming separate processing cores within a single semiconductor device.

Random access memory (RAM) 40 is provided for volatile storage of program instructions and data for utilisation by the processor 20. The operation of RAM 40 and interaction with host bus 70 is controlled by a memory controller 35, which is located directly between RAM 40 and bus 70. The connection between the memory controller 35 and RAM 40 can be provided by a separate bus or any other suitable form of data link. (It is also possible for the memory controller to be implemented in a single device with RAM 40). There may be multiple memory controllers, each coupling one or more blocks of RAM to the bus 70.

Computer system 10 also includes various other devices attached to bus 70. These include a network interface unit 45, I/O units 80, and non-volatile storage 55. The network interface unit 45 allows system 10 to send data out over and receive data from network 65 (which may for example be the Internet). It will be appreciated that any given computer system may in fact be linked to multiple networks, such as by a telephone modem, by a LAN interface unit, and so on. The various I/O units 80 typically comprise one or more keyboards, monitors, and so on. These allow users to directly interact with system 10. Non-volatile storage 55 is normally provided by one or more hard disk drives (potentially configured into an array), but may also include tape storage and/or optical storage (such as a CD-ROM, DVD, etc). Storage 55 may be dedicated to one particular computer system 10, or may be shared between multiple systems, via an appropriate connection, such as a fibre channel network.

The processor 20 typically operates at a much higher speed than host bus 70 and RAM 40. Therefore, in order to avoid processing delays while data is being accessed, a cache 30 is provided. This has a smaller capacity than RAM 40, but can provide a much faster response to the processor 20. Thus in effect, cache 30 provides processor 20 with a fast, local copy of selected data from RAM 40.

The processor 20 generally accesses data and instructions by means of a virtual address (typically either a 32-bit or 64-bit number in modem systems). This virtual address is then converted into a real address representing a physical location in RAM 40 by a hardware memory management unit (MMU) (not shown in Figure 1). Note that normally RAM is too small to be able to accommodate the entire address range. Therefore, it typically only stores selected portions of the address range, with the remainder being backed out to hard disk 55. The portions of address space stored out to disk can then get promoted into RAM 40 when access is required by a process. The (fixed) unit of memory transfer between RAM and the hard disk is known as a page of memory.

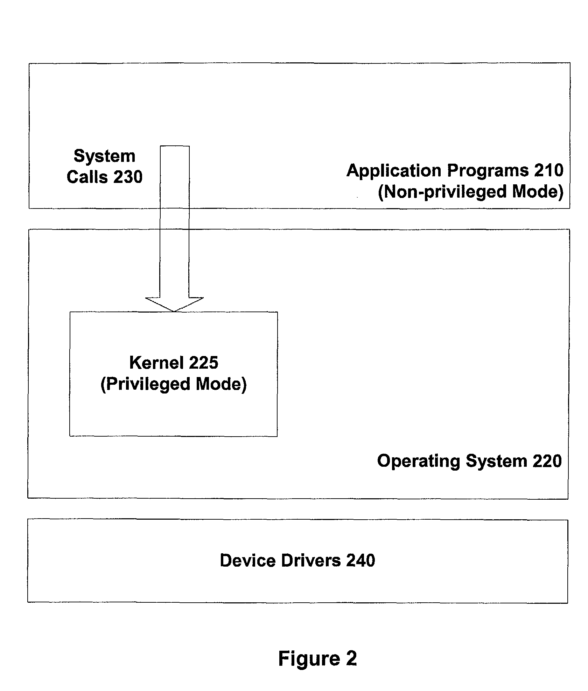

Figure 2 is a schematic diagram of the main software components running on a computer system such as that shown in Figure 1. In particular, there are one or more application programs 210 running (in non-privileged mode) on top of the operating system 220. The core of the operating system is the kernel 225, which runs in privileged mode. Applications can access functionality in the kernel by making system calls 230, typically via a system application programming interface (API).

Also shown in Figure 2 is a layer of one or more device drivers 240. A device driver is a low-level code block to allow the operating system 220 to interact with various hardware devices, such as graphics cards, network adapters, and so on. Note that in many cases these device drivers are written by the vendor of the particular hardware device, and so are developed separately from the main operating system 220. Since device driver code is generally regarded as an extension of the operating system 220, it also runs in privileged mode.

The software components shown in Figure 2 are generally loaded from memory 40 into processor 20 for execution (see Figure 1). Some or all of these components may be pre-installed onto hard disk 55, or loaded off some portable storage medium, such as a magnetic tape, CD ROM, DVD, etc (not shown in Figure 1). Similarly, some or all of the software may be downloaded via a transmission medium over network 65. Note that software obtained from a storage or transmission medium may be saved on storage 55, or may be loaded directly for execution into memory 40 and processor 20.

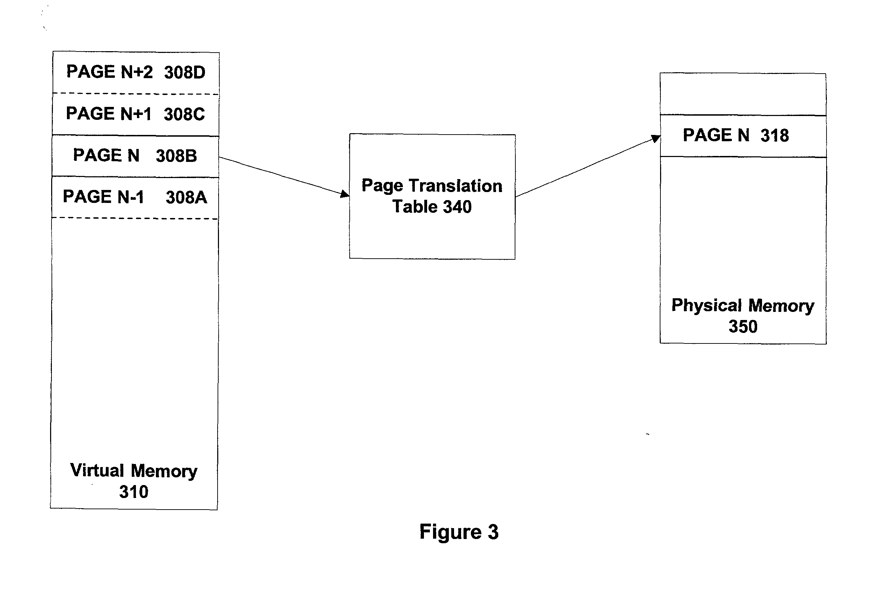

Figure 3 is a schematic diagram of the virtual memory used by a process running on a computer system such as shown in Figure 1. Note that a separate address space can be defined for each process running on the system, although these may overlap in terms of allocated real memory. For example, the code for a shared library may be included in the address space of multiple processes, although not necessarily always at the same address.

A linear virtual address space 310 is used, which is generally divided into large sections called segments (not specifically shown in Figure 3). The different segments are used to store different types of information (data or instructions), such as the process code, shared libraries, the process stack, and so on. Each such segment comprises one or more pages 308A, B, C, D.

A virtual address is normally interpreted as the combination of a page number and an offset into the page. In order to access the physical memory associated with an address, the system uses the page number for the address to access a page translation table 340. Each page has its own translation table entry (TTE) in the page table 340 that lists the location 318 of that particular page in physical memory 350. For example, as depicted in Figure 3, page N 318 in physical memory 350 represents the real memory corresponding to page N 308B in virtual memory 310, and can be accessed by using the page number (N) to index into the relevant TTE in page translation table 340. This TTE then includes a pointer or reference to page N 318 in physical memory.

Note that a contiguous sequence of pages in virtual address space (N-1 through to N+2, as shown in Figure 3) does not necessarily have to be reproduced in the same sequence in RAM 40. For example, in physical memory, the pages may be separated from one another and/or stored in a different order (compared to their virtual addresses).

Furthermore, as previously indicated, the virtual memory space normally exceeds the available physical memory (sometimes significantly). Therefore, the system swaps pages into and out of physical memory according to the particular needs of the processes, with swapped out pages being stored on hard disk 55. The TTE for a particular page indicates if the page is currently swapped out of memory.

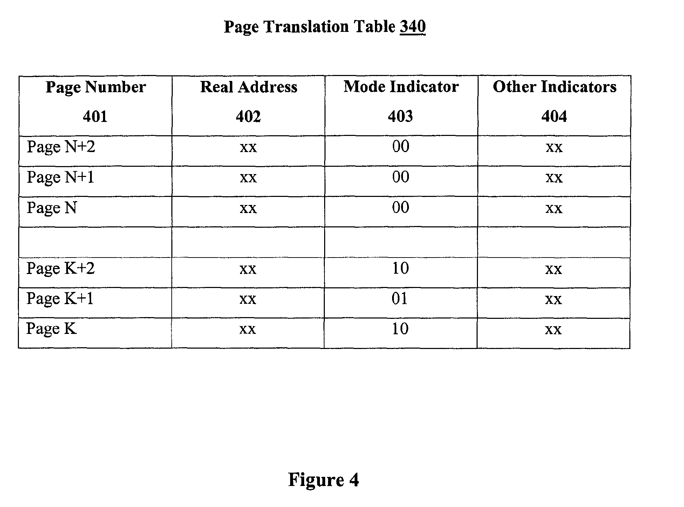

Figure 4 is a schematic depiction of the page translation table 340 from Figure 3. Note that the top line of this table, comprising the column headings, is for the purpose of exposition only, and would not normally be present in an actual implementation. Each of the remaining lines in the page translation table 340 represents a translation table entry (TTE). Note that only a limited number of such TTEs are shown in Figure 4. For example, a 32-bit system having a 4k-page size has over one million TTEs. (It will be appreciated that in practice various techniques may therefore be used to condense the size of the translation table 340; however these techniques are not pertinent to the present invention and so will not be described further).

Figure 4 illustrates two groups of contiguous TTEs, schematically separated by a blank row (to represent the set of TTEs that lies between the two groups). The first group of contiguous TTEs starts at page K, and the second group of contiguous TTEs starts at page N.

The page translation table 340 of Figure 4 has four columns. A first column 401 represents the page number. This is the index into the table to allow the TTE for a given page to be located. It will be appreciated that in some embodiments, this column can be omitted, since it may be implicit based on location. In other words, the TTE for a given page can be accessed based on the location of the start of the page translation table 340 (corresponding to page 0), the desired page number, and the (fixed) size of a single TTE.

The second column in Figure 4 represents the real address of the page corresponding to that TTE. These entries are shown indicatively by a simple "XX", since their precise values are not relevant at present. Note that for certain pages, the page may not be currently located in memory, but rather may be swapped out to disk storage 55. This may be indicated by storing some predetermined value within address column 402, or else it may be flagged by an appropriate bit or other indicator in column 404 (see below), in which case the address in column 402 should normally be regarded as invalid.

The third column in page translation table 340 stores a mode indicator 403 for that page. The purpose and use of this mode indicator will be described in more detail below.

The final column in the page translation table represents a set of further indicators. Thus the page translation table 340 typically includes multiple flags and other information associated with each page. For example these flags can indicate whether or not the page has been updated since being loaded from disk storage. If this is not the case, then a page to be swapped out does not need to be actually copied back to storage, rather the entry can simply be deleted from the table 340. Another possible indicator, as previously mentioned, is a bit that indicates whether this page is currently present in memory 40, or whether it is instead backed out to storage 55.

A further indicator bit can be set to control whether or not the page is allowed to be swapped out to memory. Thus certain pages must be retained in physical memory 350 in order to ensure that they are always properly accessible to the processor. An example of this would be the kernel routine that performs the swapping operation between memory 40 and storage 55. Clearly this code cannot be swapped out of memory, otherwise it would not be available to load itself back in again when required. In practice most (if not all) of the kernel is flagged as non-swappable, and so is always maintained in physical memory 350.

There can be other information in column 404 as well, such as when the page was loaded into memory, and when it was last accessed by the processor. This sort of information may be useful in deciding which particular page to swap out of the page translation table 340 if there is a shortage of space in physical memory 350. The skilled person will be aware of further items that may be stored in column 404 or elsewhere in page translation table 340. However, these are not directly relevant to an understanding of the present invention, and so will not be described further.

Returning to the mode indicator column 403, in accordance with one embodiment of the invention, this contains an indicator that has 3 available settings, namely:
00 - this is used to denote a page that can be legitimately accessed from any other location within the address space, whether part of the application code, or part of the kernel. This indicator setting is generally applied to pages that contain the application code.
10 - this is used to indicate a page containing kernel code that can be accessed either by other kernel code, or by application code. In other words, it can again be legitimately accessed from any other location in the address space, irrespective of the mode indicator setting for the accessing page.
01 - this mode indicator again is used to indicate a page containing kernel code. However, access to this kernel code from application code is prohibited, i.e. no access is allowed from a page having a mode indicator of 00. Rather access is only permitted from a location inside the kernel, in other words, from a page having a mode indicator of 10 or 01.

The mode indicator setting in column 403 can, in some ways, be considered as an enhancement of the single bit flag from existing systems that indicates whether a page is accessible in non-privileged mode, or only in privileged mode. However, rather than simply representing an access control, the mode indicator 403 in the embodiment of Figure 4 is now used to determine or control the actual mode in which a process executes.

One possible way of doing this is to drive the execution mode directly off the mode indicator itself. In other words, application mode is used for code having a mode indicator of 00, while kernel mode is used for code having a mode indicator of 10 or 01. In a particular embodiment, however, a slightly different approach is taken, whereby it is only changes in page that are used to trigger a switch from application mode to kernel mode (or visa versa). More particularly, whenever a 10 page is jumped to from a 00 page, the chip is moved into privileged mode. In contrast when a 00 page is jumped to from a 10 page or from a 11 page, the chip is moved into non-privileged mode.

It will be appreciated that because this mode switching is performed based on the page locations of the relevant code, there is no longer any requirement to use a trap to implement a system call in order to achieve the desired change in privilege level. Rather a simple function call from an application program into the kernel, typically involving a jump in processing location, is now adequate to update the processor mode appropriately. By eliminating the need to use a trap routine to transfer from user mode into kernel mode, the overhead associated with making a system call is therefore greatly reduced.

On the return from the system call (implemented as a function call), this again represents a jump of processing location, and so resets the processing mode back to a non-privileged mode (assuming that the return is back from the kernel into the application code). Note that this mode switch on return can be driven directly by the mode indicator for the calling routine location at which processing resumes upon conclusion of the system call. Alternatively, the mode associated with this calling location can be stored at the initiation of the function call, along with various other information about the calling function that is typically saved to the stack. Then on making the return, the system automatically reverts back to this saved mode.

In the context of Figure 4, pages N→N+2 represent application code, since they have a 00 indicator in column 403. In contrast pages K→K+2 represent kernel code, since they have a 01 or 10 indicator in column 403. More particularly, pages K and K+2 are accessible to any other pages (application or kernel), given their 10 indicator in column 403, whereas page K+1 is only accessible to code in kernel pages (i.e. from pages K→K+2), given its 01 indicator.

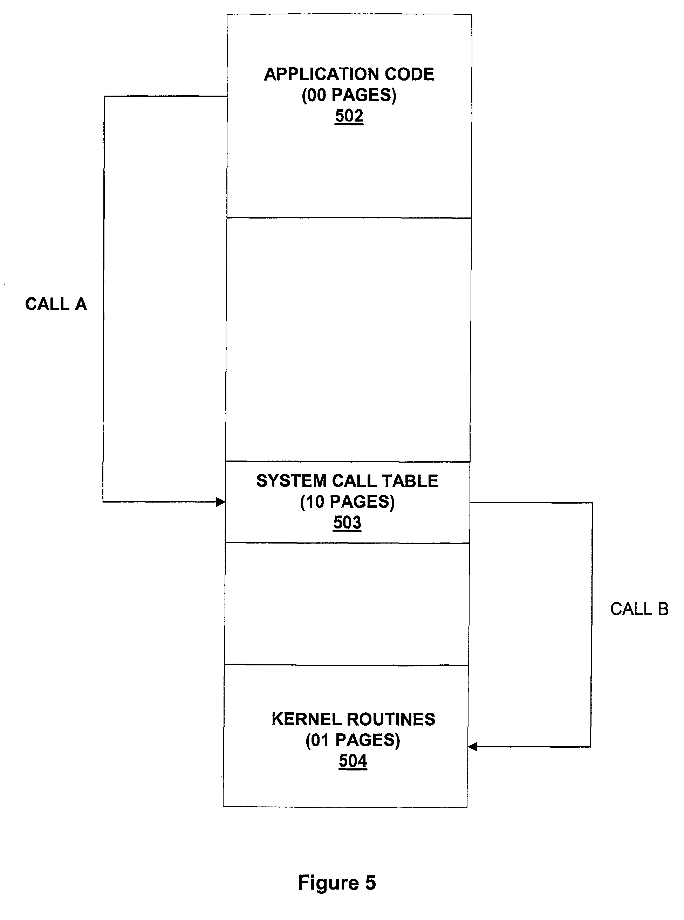

An important concern is that this increase in speed for invoking system calls does not compromise security. In particular, it is undesirable for user code to be able to invoke an arbitrary piece of kernel code. In one embodiment, this is avoided by limiting the number of kernel pages having a 10 designation, and having only a carefully controlled interface into the kernel. Thus with reference to Figure 5, this shows a memory space including application code 502, a system call table 503, and kernel routines 504. The application code is stored in pages having a 00 mode; the system call table is stored in pages having a 10 mode (and so is formally part of the kernel); while the main kernel routines themselves are stored in pages having a 01 mode.

When an application program makes a system call (call A), this is directed into an appropriate entry in the system call table 503. This in turn leads to the call being forwarded (call B) from the system call table to the relevant kernel routine 504. Thus the application code does not have direct access to the kernel routines themselves, but rather is only permitted access to selected points, as determined by the system call table. Providing this level of indirection therefore enhances security, albeit at the cost of a slight decrease in performance. (If speed is a primary consideration, some or all of the kernel can be maintained in 10 pages, where it can be accessed directly by the application, without having to go through the system call table 503).

In some ways the system call table 503 of Figure 5 can therefore be regarded as analogous to the trap table of existing systems. However, the system call table does not invoke a trap routine, but rather transfers processing directly to the specified kernel code, thereby avoiding the overheads associated with utilising a trap routine. Note also that unlike the prior art trap table, which is normally limited in size by the hard-wired processor design, the system call table can be more flexible, and potentially vary in size as required.

As a further security precaution, it is generally prohibited for an application program (in user mode) to change the setting of mode indicator column 403. Rather, this can only be done by a restricted set of (kernel) routines. It will be appreciated that this ensures that an ill-behaved application does not accidentally (or deliberately) alter the settings, for example to promote itself to having privileged status, or to demote part of the kernel to non-privileged status, whereby that the system can no longer operate properly. (In fact, most existing systems already prevent user mode access to any of the page translation table, in order to minimise the risk of disruption to this critical system resource).

Apart from providing generally faster system calls, there are various other ways in which the provision of mode indicators 403 in the page translation table 340 can be exploited. One possibility is to locate certain device drivers so that they are executed in non-privileged mode. Thus as previously stated, device drivers are usually supplied by a third party, and may also be installed by a user, such as when performing a hardware upgrade, rather than being supplied as part of the initial system configuration. Consequently, there is a comparatively high risk of some problem arising in connection with a device driver, for example because of some coding deficiency in the device driver itself, or because of some unexpected incompatibility with another system component.

This risk is compounded because a device driver is regarded as part of the operating system, and so executes in kernel mode. In other words, a device driver is accorded the same level of trust to manipulate the system as the operating system. Therefore, if a device driver misbehaves, it typically takes the system down with it, requiring a reboot to restart. This is to be contrasted with a problematic application program, which can normally be terminated by the operating system without adversely affecting any other programs, since the application program is executing in user mode.

In order to address this problem, a device driver can now be located in pages having a 00 mode indicator (e.g. such as pages N→N+2 in Figure 4). This then causes the system to transition to user mode whenever the device driver code is called for execution. As a result, the damage that any device driver misbehaviour can cause to the system is limited to that of a normal application (as executing in user mode). Note that this facility exploits the fact that the mode indicator 403 now provides a positive mechanism to transfer from kernel mode to user mode (based on a transition from a 10 or 01 page to a 00 page), in contrast to simply exiting at the conclusion of a trap routine.

Note that it will generally be desirable to return from a device driver to an application program through the kernel. This then implies a transfer from a 00 device driver page into a 10 or 01 kernel page. In one embodiment, this is achieved by providing a suitable set of entry points in a table stored in 10 pages (analogous to system call table 503 in Figure 5).

In another embodiment, the mode indicator setting 403 is extended to contain a fourth value 11 that is used especially for device drivers. Code having this page setting executes in user mode and is accessible to kernel code (01 or 10 pages), but it is inaccessible (directly) to application code (00 pages). In addition, transitions are then permitted from 11 pages to other 11 pages, to 01 pages, or to 10 pages, but not to 00 pages. It will be appreciated therefore that this approach isolates the device drivers from the application programs (and vice versa), and also allows them to interact fully with the kernel.

Another possible configuration arises where performance is a major consideration, and where a trusted application program is installed. The trusted application usually represents a significant piece of code, running on many systems, and often developed with some form of collaboration or assistance from the system manufacturer. An example of this might be an application server for performing transaction processing, e.g. of database records. In this configuration, the application server would typically be regarded as middleware, with user-written applications then running on top of it.

In such a situation, it may be desirable to allow at least some portions of the application server code itself to reside in 10 pages. For example, such application servers often suffer from high system call overhead when accessing short network interface functions in the kernel. To address this problem, the application server program could be permitted to code the network interface functions itself, and store them in 10 pages, thereby eliminating the system call overhead in utilising these functions.

Returning to Figure 4, it will be appreciated that having the mode indicator 403 with a page level granularity in principle allows application code pages to be intermingled with kernel pages. However, in most practical implementations, it is expected that the kernel and the application code will actually be located in separate blocks (as shown in Figures 4 and 5). In such circumstances, where the kernel and application code each occupies a contiguous block of addresses, the switching between privileged mode and non-privileged mode may be driven by address range. This avoids the need to provide a mode indicator for every page, and so may have certain performance advantages.

A further benefit of having different (separated) blocks for the various types of pages is that it avoids the risk of progressing unexpectedly from one type of page to another type of page. Thus in general there are two mechanisms to transfer processing location from one page to another. A first possibility is to make a function call, resulting in a code jump to a new page, so that there is a discontinuity in processing location. The other possibility is simply for a set of instructions to span a page boundary, in which case processing will then naturally cross the page boundary as the code instructions are executed.

Note that the latter case may cause a problem if two adjacent pages have different mode indicators, and the processing mode is only switched on function calls. In this situation, the system may therefore transition from a page having one mode to a page having another mode without detecting this transition, and so without switching mode as appropriate. One way to prevent this is to ensure that pages having different modes are always separated from one another (such as by having non-allocated pages inbetween). An example of such separation is shown in the address mappings of Figure 5. In this situation, the normal flow of execution cannot go from one page mode to another page mode (absent making a function call), since the different categories of page are clearly separated from one another.

Of course, in some embodiments, a check may be made so that both types of page transition are detected (those arising both from normal code execution and also from function calls). By appropriate location of the various kernel and application pages, this could then allow very fast mode switching (without the need even for a function call). In other words, the code would simply progress from an instruction on a first page to an instruction on a second (following) page, and this could then trigger a switch from privileged mode to non-privileged mode or vice versa, depending on the mode indicator settings for the first and second pages. On the other hand, the speed gain here must be offset against the increased overhead of checking for a possible mode switch on each page transition, rather than limiting such checks to processing jumps or functions.

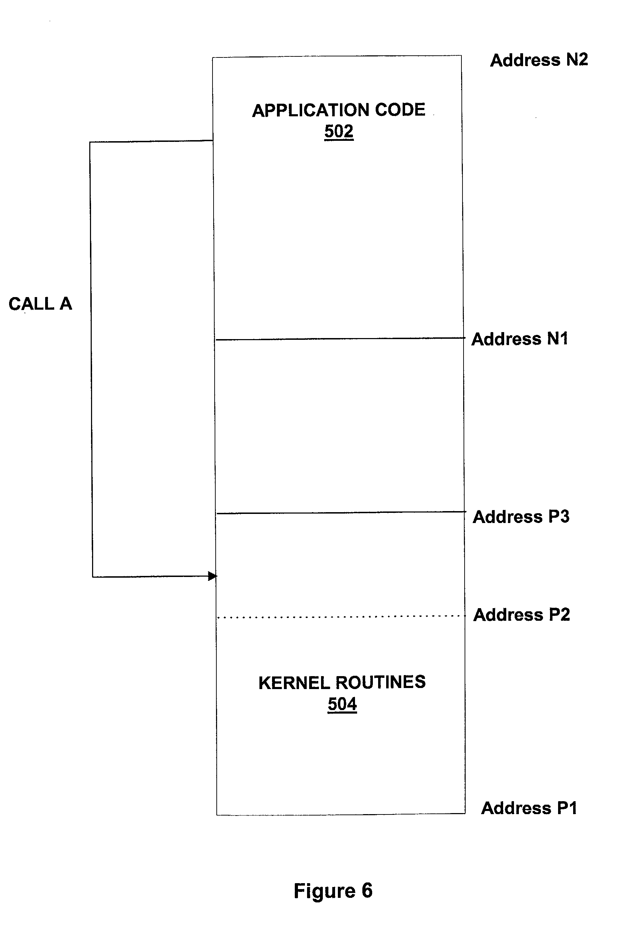

Figure 6 illustrates an embodiment in which the split between privileged and non-privileged mode is determined by address limits, rather than having a mode indicator for each page. Thus Figure 6 depicts a system address space, including application code 502 and kernel routines 504. In this embodiment, everything in the address range N1→N2 has the same properties as a 00 page, everything in the address range P1→P2 has the same properties as a 10 page, and everything in the address range P2→P3 has the same properties as a 11 page. Accordingly, address range N1→N2 corresponds to the application code (non-privileged mode), while address range P1→P3 corresponds to the kernel (privileged mode).

System calls are implemented in this embodiment in largely the same way as any normal function call. Thus a call instruction causes the CPU to save a return address in an appropriate register, plus stack information, and then to start processing from a new code location. However, unlike conventional function calls, the system also uses the location of the new code to determine the mode of execution. Thus for each function call, the system determines if the address of the new code is in the address range P1→P3, in which case it executes in privileged mode, or in the address range N1→N2, in which case it executes in non-privileged mode.

In particular, in the embodiment of Figure 6, a call from the range N1→N2 into P2→P3 switches the system into privileged mode, while a call from the range P1→P3 into N1→N2 switches the system into non-privileged mode. Note that a call from the range N1→N2 into the range P1→P2 is not permitted, since it is analogous to a transfer direct from a 00 page to a 01 page.

It will be appreciated that the portion of the kernel in the address range P2→P3 may simply represent a system call table, such as shown in Figure 5. Also, the kernel 504 and application code 502 need not extend fully across their allocated areas, as long as they are contained within the address ranges indicated. Furthermore, in some embodiments, the kernel may be split into two separate (non-contiguous) address ranges, the first of which is inaccessible to application code (analogous to 01 pages), while the second is accessible to application code (analogous to 10 pages). In this case, the first address range may be identified as P1→P2, while the second address range may be specified (for example) as P3→P4.

A further possibility is that all the kernel is accessible to the application code (analogous to 10 pages) and so would be stored in the range P3→P4. In this case, there is no kernel that is inaccessible to the application code (in other words, range P1→P2 would be empty). This arrangement might typically be adopted where speed is much more of a priority than system security.

The addresses N1, N2, P1, P2, and P3 in the embodiment of Figure 6 are typically determined as part of the system configuration or at system initialisation, although in certain embodiments they may be updateable by the kernel. Thus the system may load the kernel into a predetermined address range P1→P3, or conversely, the address range P1→P3 may be set to represent the location of the kernel following any particular initialisation. Likewise, the system may load application code into a predetermined address range N1→N2, or this may be determined based on where the application code has been loaded on any particular occasion.

(Note that the loading of the kernel and the application programs may well extend beyond system initialisation. For example, portions of the kernel may be subsequently loaded on a dynamic basis, while application programs are often loaded as and when they are invoked by a user. In order to cope with this, the address ranges P1→P3 and N1→N2 may be dynamically updateable by the system in response to such loadings, or the initially specified ranges may contain sufficient spare capacity to be able to accommodate any subsequent additions).

It will be appreciated that the application code itself should not normally be allowed to update the address ranges N1→N2 and P1→P3, otherwise this could lead to a security exposure. In particular, if an application were to modify these ranges, it might be able to place itself into privileged mode, and/or cause some other form of system disruption.

Once the limit addresses for the application code and kernel have been determined, these values are then made available for testing as part of a function call, to decide whether or not to switch mode. Alternatively in the embodiment of Figure 5, this information can be used to populate the settings of the mode indicator column 403 (see Figure 4) on a page-by-page basis. Another possible approach in this latter embodiment is for the mode indicator 403 settings to be determined when each individual page is first loaded.

In conclusion, a variety of particular embodiments have been described in detail herein, but it will be appreciated that this is by way of exemplification only. The skilled person will be aware of many further potential modifications and adaptations that fall within the scope of the claimed invention and its equivalents.

## Claims

1. A method of controlling a computer system running one or more application programs and an operating system incorporating a kernel, said method comprising the steps of:
providing a privileged mode for executing routines belonging to said kernel, and a non-privileged mode for executing routines belonging to an application program;
locating the kernel within a first region of memory, and the application program in a second region of memory; and
setting the system to privileged mode in response to accessing code in said first region of memory and to non-privileged mode in response to accessing code in said second region of memory.

2. The method of claim 1, wherein the application program in the second memory region accesses the kernel in the first memory region by making a system call.

3. The method of claim 2, wherein said system call is implemented as a standard function call.

4. The method of claim 3, wherein said step of setting comprises:
switching to privileged mode in response to a function call from the second memory region into the first memory region; and
switching to non-privileged mode in response to a function call from the first memory region into the second memory region.

5. The method of claim 3 or 4, wherein said step of setting further comprises reverting to a previous mode at the conclusion of a function call.

6. The method of any of claims 3 to 5, wherein the step of setting further comprises comparing a calling address and a called address for the function call against predetermined address limits to determine in which memory region said calling address and called address are located.

7. The method of any of claims 1 to 5, wherein the computer system memory is divided into pages, and the method further comprises the step of associating an indicator with each page representative of whether the page is located in said first region of memory or said second region of memory.

8. The method of claim 7, wherein said indicator is stored in a page translation table.

9. The method of claim 7 or 8, wherein said indicator has a first value for the second memory region, and a second or third value for said first memory region, and wherein:
code on a page having said first value executes in non-privileged mode and can be accessed from code on a page having said first, second or third value;
code on a page having said second value executes in privileged mode and can be accessed from code on a page having said first, second or third value; and
code on a page having said third value executes in privileged mode and can be accessed from code on a page having said second or third value.

10. The method of claim 9, wherein a page having said second value is used to reference code routines on one or more pages having said third value.

11. The method of any preceding claim, wherein said first memory region is divided into first and second sub-regions, and wherein a function call from the second memory region is permitted into only one of said first and second sub-regions.

12. The method of any preceding claim, wherein said first and second memory regions are determined as part of system initialisation.

13. The method of any preceding claim, wherein at least a portion of device driver code is located in the second memory region.

14. The method of any preceding claim, wherein at least a portion of trusted application code is located in the first memory region.

15. A computer program for implementing the method of any preceding claim.

16. A computer program product comprising program instructions embodied on a media, wherein said instructions, when loaded into a computer system running one or more application programs and an operating system incorporating a kernel, cause the computing system to perform the method of:
providing a privileged mode for executing routines belonging to said kernel, and a non-privileged mode for executing routines belonging to an application program;
locating the kernel within a first region of memory, and the application program in a second region of memory; and
setting the system to privileged mode in response to accessing code in said first region of memory and to non-privileged mode in response to accessing code in said second region of memory.

17. A computer system running one or more application programs and an operating system incorporating a kernel and comprising:
means for providing a privileged mode for executing routines belonging to said kernel, and a non-privileged mode for executing routines belonging to an application program;
means for locating the kernel within a first region of memory, and the application program in a second region of memory; and
means for setting the system to privileged mode in response to accessing code in said first region of memory and to non-privileged mode in response to accessing code in said second region of memory.

18. A computer system comprising:
one or more application programs having routines that execute in a non-privileged mode;
an operating system incorporating a kernel having routines that execute in a privileged mode; and
a memory, wherein the kernel is located within a first region of memory, and the application program is located within a second region of memory; and
wherein the system is responsive to an access to code in said first region of memory to set the system into privileged mode, and is responsive to an access to code in said second region of memory to set the system into non-privileged mode.

19. The system of claim 18, wherein said access to code in said first region of memory and said access to code in said second region of memory each represents a jump of processing location.

20. The system of claim 19, wherein said access to code in said first region is made by said one or more application programs making a system call.

21. The system of any of claims 18 to 20, wherein the system maintains predetermined address limits for said first and second memory regions, and determines an access to said first and second memory regions by comparing an accessed address with said predetermined address limits.

22. The system of any of claims 18 to 20, wherein the computer system memory comprises multiple pages, and the system further comprises a page translation table having an entry for each page, wherein each entry includes an indicator representative of whether the page is located in said first region of memory or in said second region of memory.

23. The system of claim 22, wherein said indicator has a first value for the second memory region, and a second or third value for said first memory region, and wherein:
code on a page having said first value executes in non-privileged mode and can be accessed from code on a page having said first, second or third value;
code on a page having said second value executes in privileged mode and can be accessed from code on a page having said first, second or third value; and
code on a page having said third value executes in privileged mode and can be accessed from code on a page having said second or third value.

24. The system of any of claims 18 to 23, wherein said first memory region is divided into first and second sub-regions, and wherein a function call from the second memory region is permitted into only one of said first and second sub-regions.

25. The system of any of claims 18 to 24, wherein at least a portion of device driver code is located in the second memory region.

26. The system of any of claims 18 to 25, wherein at least a portion of trusted application code is located in the first memory region.
